# EUROPEAN PATENT APPLICATION

(11) **EP 4 316 262 A1**
(43) Date of publication of application: **07.02.2024**
(21) Application number: 22775666.5
(22) Date of filing: 23.03.2022
(51) Int. Cl.: A23J 3/26, A23L 13/00, A23L 11/00

(54) **METHOD FOR PRODUCING TEXTURED PROTEIN MATERIAL, AND TEXTURED PROTEIN MATERIAL**

(30) Priority: 25.03.2021 JP 2021051020
(71) Applicant: Fuji Oil Holdings Inc., Izumisano-shi, Osaka 598-8540 (JP)
(72) Inventor: HASHIMOTO, Shuzo, Izumisano-shi, Osaka 598-8540 (JP)
(74) Representative: Boult Wade Tennant LLP
(86) International application number: PCT/JP2022/013420
(87) International publication number: WO 2022/202884

(57) **Abstract**

The present invention addresses the problem of providing a textured plant protein material having chewiness due to a dense texture with small voids, and favorable restorability when reconstituted in hot water. Discovered is a freeze-dried textured protein material having favorable restorability when reconstituted in hot water and chewiness due to a dense texture with small voids. The textured protein material is produced by (A) introducing a raw material including a protein raw material into an extruder, adding water to attain a water content of from 60 to 80 wt.% with respect to a total amount of the water and the raw material including the protein raw material, kneading and heating under pressure the resulting mixture, cooling the kneaded mixture in a cooling die installed at an outlet of the extruder and including a hole having a length of a longest portion of 10 mm or greater, and extruding the mixture through the cooling die to obtain an unpuffed textured product, (B) cutting the unpuffed textured product obtained in (A) into a rectangular parallelepiped shape including sides from 5 to 12 mm, or cutting the unpuffed textured product obtained in (A) into a flat shape having a thickness from 0.1 to 5 mm, a length from 1 to 80 mm in an extrusion direction, and a width from 1 to 50 mm, and (C) freezing the unpuffed textured product obtained in (B) at from -5 to -25°C and freeze-drying the unpuffed textured product.

## Description

### Technical Field

The present invention relates to a method for producing a textured protein material, and a textured protein material.

### Background Art

Instant dried ingredients are dried ingredients that can be converted into a comestible state in three to five minutes by a preparation method such as reconstitution in hot water, addition of cold or hot water and simmering, or addition of water and heating in a microwave oven. Instant noodles, instant miso soups, and the like that use such instant dried ingredients can be stored for long periods of time and are regarded as food materials that will continue to be important in the future from the viewpoint of sustainability in recent years. Additionally, the importance of instant foods is increasing with the recent increase in eating at home for the prevention of infectious diseases. With such trends, instant dried ingredients not only impart color to a product, but are also one of important elements deeply related to the good taste of the product.

Typical instant dried ingredients that are known include vegetables, livestock meat, and processed meat products. Examples of instant dried ingredients of vegetables include cabbage, green onion, and seaweed, which are dried in their original form or after pretreatment, such as seasoning or boiling, to a final water content of about 2 to 3 mass% by a freeze-drying (FD) method or a hot air drying (AD) method. Examples of the instant dried ingredients of livestock meat include beef, pork, and chicken, which are dried in their original form or after pretreatment, such as seasoning or boiling, by an FD or an AD method. Furthermore, in recent years, instant dried ingredients mixed with a textured protein, having a meat-like mouthfeel, to harden the texture and improve restorability are also used. Examples of the instant dried ingredients of processed meat products include processed meat products obtained from livestock meat, fish meat, or similar raw materials, including sausages, roasted pork, diced meat, fish cake, and fish sausages, which are dried by an FD or an AD method.

In recent years, textured protein materials have drawn increasing attention from the viewpoint of sustainability. Textured protein materials, obtained by using plant-derived protein raw materials such as soybeans and wheat as main raw materials and puffing the structure of the raw material mixture in an extruder, are typically made to have a quality close to that of livestock meat-like elasticity and are widely used as ingredients in the production of processed foods that use livestock meat, such as hamburger steak, meatball, gyoza (chiaotzu), steamed bun, shu mai (steamed meat dumpling), minced meat cutlet, croquette, and minced meat. This textured protein material is puffed when discharged from an extruder and includes voids therein, and thus has favorable restorability when hot water is added thereto, and is often used as a meat substitute for instant foods.

In recent years, a patent application is filed which combines a protein raw material with an auxiliary raw material to create a textured protein material having a distinctive mouthfeel. The applicant also patented a technique of realizing a textured protein material having a meat-like mouthfeel with more appropriate hardness and meat-like looseness by the addition of oat fiber as an auxiliary material (Patent Document 1).

In Patent Document 2, a textured protein material extruded from an extruder is reconstituted in water, dehydrated, seasoned, and dried, thereby maintaining an expanded state of the voids in the textured protein material and achieving favorable restorability when hot water is added thereto.

Patent Document 3 is a patent document relating to dried noodles, and reports a dried noodle material having chewiness and excellent restorability by the adjustment of a size and a ratio of the voids in the dried noodles.

### Citation List

### Patent Literature

Patent Document 1: JP 5794373 B
Patent Document 2: JP 2017-175942 A
Patent Document 3: JP 2016-127856 A
Patent Document 4: JP 4780099 B

### Summary of Invention

### Technical Problem

Textured plant protein materials for instant food applications have excellent restorability when hot water is added thereto due to the presence of internal voids. However, the voids are large in number, resulting in a soft mouthfeel, or a mouthfeel that differs from that of meat, like chewing on a sponge. In fact, most textured protein materials currently used in instant foods are small in particle size, which basically results in a mouthfeel that is not distinctive.

Although it is possible to prepare a material having chewiness by adjusting the size and the ratio of the voids as in Patent Document 3, in a food that is puffed by using an extruder, the voids become large, making it difficult to obtain chewiness by such a method. Further, the textured protein material obtained by using the technique of Patent Document 1 realizes a dense fiber texture while suppressing puffing and has a mouthfeel remarkably close to that of meat. However, the dense texture deteriorates the restorability when hot water is added thereto, making it difficult to utilize the textured protein material in instant foods.

In Patent Document 2, a textured protein material having a porous structure is reconstituted in water, dehydrated, seasoned, and dried with hot air, thereby maintaining an expanded state of the voids in the textured protein material and achieving favorable restorability when hot water is added thereto. Although the voids are shrunk by the drying, the voids are still large compared to the textured protein material before reconstitution in water, and thus the texture is not regarded as dense.

Thus, there is a demand for a textured plant protein material that has chewiness due to a dense texture with small voids, is filling due to a large size, and has favorable restorability when reconstituted in hot water.

Accordingly, an object of the present invention is to provide a textured plant protein material having chewiness due to a dense texture with small voids, and favorable restorability when reconstituted in hot water.

### Solution to Problem

As a result of intensive studies related to the problems described above, the present inventors completed the present invention based on the finding that a textured protein material produced and freeze-dried by the following steps (A) to (C), that is:
(A) introducing a raw material including a protein raw material into an extruder, adding water to attain a water content of from 60 to 80 wt.% with respect to a total amount of the water and the raw material including the protein raw material, kneading and heating under pressure the resulting mixture, cooling the kneaded mixture in a cooling die installed at an outlet of the extruder and including a hole having a length of a longest portion of 10 mm or greater, and extruding the mixture through the cooling die to obtain an unpuffed textured product,
(B) cutting the unpuffed textured product obtained in (A) into a rectangular parallelepiped shape including sides from 5 to 12 mm, or cutting the unpuffed textured product obtained in (A) into a flat shape having a thickness from 0.1 to 5 mm, a length from 1 to 80 mm in an extrusion direction, and a width from 1 to 50 mm, and
(C) freezing the unpuffed textured product obtained in (B) at -5 to -25°C and freeze-drying the unpuffed textured product,
has favorable restorability when reconstituted in hot water, and chewiness due to a dense texture with small voids.

That is, the present invention relates to:
(1) a method for producing a textured protein material that is freeze-dried, the method including:
   (A) introducing a raw material including a protein raw material into an extruder, adding water to attain a water content of from 60 to 80 wt.% with respect to a total amount of the water and the raw material including the protein raw material, kneading and heating under pressure the resulting mixture, cooling the mixture in a cooling die installed at an outlet of the extruder and including a hole having a length of a longest portion of 10 mm or greater, and extruding the mixture through the cooling die to obtain an unpuffed textured product;
   (B) cutting the unpuffed textured product obtained in (A) into a rectangular parallelepiped shape including sides from 5 to 12 mm, or cutting the unpuffed textured product obtained in (A) into a flat shape having a thickness from 0.1 to 5 mm, a length from 1 to 80 mm in an extrusion direction, and a width from 1 to 50 mm; and
   (C) freezing the unpuffed textured product obtained in (B) at from -5 to -25°C and freeze-drying the unpuffed textured product,
(2) in the method for producing a textured protein material described in (1), in step (A), a content of the protein raw material in the raw material is from 40 to 95 wt.% in terms of solid content,
(3) in the method for producing a textured protein material described in (1), the protein raw material is a plant protein material,
(4) in the method for producing a textured protein material described in (2), the protein raw material is a plant protein material,
(5) in the method for producing a textured protein material described in (4), the plant protein material is a reduced-fat soybean protein material satisfying the following requirements (a) and (b):
   (a) a protein content based on solid content is 40 wt.% or greater, and
   (b) a lipid content of the soybean protein material (content of an extract by a chloroform/methanol mixed solvent) is less than 40 wt.% with respect to the protein content,
(6) in the method for producing a textured protein material described in (1), in step (A), the raw material further includes a dietary fiber in an amount from 1 to 10 wt.% in terms of solid content,
(7) in the method for producing a textured protein material described in (1), in step (A), the raw material further includes a starch in an amount from 1 to 5 wt.% in terms of solid content,
(8) in the method for producing a textured protein material described in (1), in step (A), the raw material further includes a dietary fiber in an amount from 1 to 10 wt.% and a starch in an amount from 1 to 5 wt.% in terms of solid content,
(9) in the method for producing a textured protein material described in (5), in step (A), the raw material further includes a dietary fiber in an amount from 1 to 10 wt.% in terms of solid content,
(10) in the method for producing a textured protein material described in (5), in step (A), the raw material further includes a starch in an amount from 1 to 5 wt.% in terms of solid content,
(11) in the method for producing a textured protein material described in (5), in step (A), the raw material further includes a dietary fiber in an amount from 1 to 10 wt.% and a starch in an amount from 1 to 5 wt.% in terms of solid content,
(12) in the method for producing a textured protein material described in (6), in step (A), the raw material further includes an oil and fat in an amount from 0.1 to 15 wt.% in terms of solid content,
(13) in the method for producing a textured protein material described in (7), in step (A), the raw material further includes an oil and fat in an amount from 0.1 to 15 wt.% in terms of solid content,
(14) in the method for producing a textured protein material described in (8), in step (A), the raw material further includes an oil and fat in an amount from 0.1 to 15 wt.% in terms of solid content,
(15) in the method for producing a textured protein material described in (9), in step (A), the raw material further includes an oil and fat in an amount from 0.1 to 15 wt.% in terms of solid content,
(16) in the method for producing a textured protein material described in (10), in step (A), the raw material further includes an oil and fat in an amount from 0.1 to 15 wt.% in terms of solid content,
(17) in the method for producing a textured protein material described in (11), in step (A), the raw material further includes an oil and fat in an amount from 0.1 to 15 wt.% in terms of solid content,
(18) in the method for producing a textured protein material described in (1), the textured protein material is used for instant food,
(19) in the method for producing a textured protein material described in (5), the textured protein material is used for instant food,
(20) in the method for producing a textured protein material described in (6), the textured protein material is used for instant food.
(21) in the method for producing a textured protein material described in (7), the textured protein material is used for instant food,
(22) in the method for producing a textured protein material described in (8), the textured protein material is used for instant food,
(23) in the method for producing a textured protein material described in (9), the textured protein material is used for instant food,
(24) in the method for producing a textured protein material described in (10), the textured protein material is used for instant food,
(25) in the method for producing a textured protein material described in (11), the textured protein material is used for instant food,
(26) in the method for producing a textured protein material described in (12), the textured protein material is used for instant food,
(27) in the method for producing a textured protein material described in (13), the textured protein material is used for instant food,
(28) in the method for producing a textured protein material described in (14), the textured protein material is used for instant food,
(29) in the method for producing a textured protein material described in (15), the textured protein material is used for instant food,
(30) in the method for producing a textured protein material described in (16), the textured protein material is used for instant food,
(31) in the method for producing a textured protein material described in (17), the textured protein material is used for instant food,
(32) a textured protein material that is freeze-dried, the textured protein material including a protein raw material in an amount from 40 to 95 wt.% in terms of solid content and having a shape satisfying the following (1) or (2):
   (1) a rectangular parallelepiped shape including sides from 5 to 12 mm, or
   (2) a flat shape having a thickness from 0.1 to 5 mm, a length from 1 to 80 mm in an extrusion direction, and a width from 1 to 50 mm,
(33) in the textured protein material described in (32), the protein raw material is a plant protein material,
(34) in the textured protein material described in (33), the plant protein material is a reduced-fat soybean protein material satisfying the following requirements (a) and (b):
   (a) a protein content based on dry matter is 40 wt.% or greater, and
   (b) a lipid content of the soybean protein material (content of an extract by a chloroform/methanol mixed solvent) is less than 40 wt.% with respect to the protein content,
(35) the textured protein material described in (34), further including a dietary fiber in an amount from 1 to 10 wt.% in terms of solid content,
(36) the textured protein material described in (34), further including a starch in an amount from 1 to 5 wt.% in terms of solid content,
(37) the textured protein material described in (34), further including a dietary fiber in an amount from 1 to 10 wt.% and a starch in an amount from 1 to 5 wt.% in terms of solid content,
(38) the textured protein material described in (35), further including an oil and fat in an amount from 0.1 to 15 wt.% in terms of solid content,
(39) the textured protein material described in (36), further including an oil and fat in an amount from 0.1 to 15 wt.% in terms of solid content,
(40) the textured protein material described in (37), further including an oil and fat in an amount from 0.1 to 15 wt.% in terms of solid content,
(41) in the textured protein material described in (32), the textured protein material is used for instant food,
(42) in the textured protein material described in (34), the textured protein material is used for instant food,
(43) a meat substitute including the textured protein material described in (32),
(44) a meat substitute including the textured protein material described in (34),
(45) an instant food ingredient including the textured protein material described in (32), and
(46) an instant food ingredient including the textured protein material described in (34).

### Advantageous Effects of Invention

According to the present invention, it is possible to provide a textured plant protein material having chewiness due to a dense texture with small voids, and favorable restorability when reconstituted in hot water.

### Brief Description of Drawings

FIG. 1 is a diagram illustrating a cut cross section of a textured protein material observed under a microscope.
FIG. 2 shows photographs, in place of drawings, obtained by observing cut cross sections of materials of Example 3 and Comparative Example 5 under a microscope.

### Description of Embodiments

Embodiments of the present invention will be described in detail below.

### Method for Producing Freeze-Dried Textured Protein Material

A method for producing a freeze-dried textured protein material according to the present invention includes the following steps (A) to (C):
(A) introducing a raw material including a protein raw material into an extruder, adding water to attain a water content of from 60 to 80 wt.% with respect to a total amount of the water and the raw material including the protein raw material, kneading and heating under pressure the resulting mixture, cooling the kneaded mixture in a cooling die installed at an outlet of the extruder and including a hole having a length of a longest portion of 10 mm or greater, and extruding the mixture to obtain an unpuffed textured product,
(B) cutting the unpuffed textured product obtained in (A) into a rectangular parallelepiped shape including sides from 5 to 12 mm, or cutting the unpuffed textured product obtained in (A) into a flat shape having a thickness from 0.1 to 5 mm, a length from 1 to 80 mm in an extrusion direction, and a width from 1 to 50 mm, and
(C) freezing the unpuffed textured product obtained in (B) at from -5 to -25°C and freeze-drying the unpuffed textured product.

The freeze-dried textured protein material according to the present invention has the characteristics described below. That is, the textured protein material includes a protein material in an amount from 40 to 95 wt.% in terms of solid content, and has a shape satisfying the following (1) or (2):
(1) a rectangular parallelepiped shape including sides from 5 to 12 mm, or
(2) a flat shape having a thickness from 0.1 to 5 mm, a length from 1 to 80 mm in an extrusion direction, and a width from 1 to 50 mm.

The textured protein material may further include, in addition to the protein material, a dietary fiber and a starch as raw materials in amounts from 1 to 10 wt.% and from 1 to 5 wt.%, respectively, in terms of solid content.

Further, the textured protein material may further include an oil and fat in an amount from 0.1 to 15 wt.% in terms of solid content in addition to the protein material, the dietary fiber, and the starch.

When the textured protein material is cut and the cut surface is observed under a microscope, the textured protein material has a dense texture with fine bubbles, and includes fibers oriented in a longitudinal direction. Conditions for the observation under a microscope will be described later.

First, the step of (A) above will be described.

A texturization method according to the present invention will now be described.

First, suitable raw materials, such as a defatted plant material such as defatted soybean, a protein raw material such as isolated plant protein or concentrated plant protein, and, if necessary, a dietary fiber, a starch, and an oil and fat, are introduced into an extruder and, under conditions of being heating under pressure inside the extruder, the raw materials are kneaded with a screw in the extruder while adding water. Subsequently, the formed kneaded product can be processed into a membrane or a fibrous structure by using a jacket-cooled die, called a "cooling die", at an outlet portion of the extruder to obtain an unpuffed textured product.

### Addition of Water

When the raw material including the protein material is supplied to the extruder, water is added. In the case of the method for producing a textured protein material according to the present invention, it is necessary to add water so that the water content is from 60 to 80 wt.%, preferably from 61 to 78 wt.%, and more preferably from 62 to 76 wt.%, based on the total amount of the water and the raw material including the protein raw material supplied to the extruder. The textured protein material produced by using the cooling die is sufficiently cooled at the outlet of the cooling die and has a surface temperature of about from 10 to 60°C. Therefore, the amount of water added is substantially the same as the actual water content in the textured protein material. Accordingly, the water content of the obtained textured product is generally from 60 to 80 wt.%, preferably from 61 to 78 wt.%, and more preferably from 62 to 76 wt.%. In a textured protein material obtained by using a cooling die containing a large amount of water, the total amount of water contained between protein fibers is large compared to that of a textured protein material obtained by using a cooling die containing a small amount of water. Therefore, when the material is evaporated, the voids included in the interior relatively increase, and the water absorption rate increases.

Further, the water used in the present invention is not particularly limited, and an aqueous solvent including a water-soluble component can be used within a range that does not affect texture, flavor, and the like.

### Protein Raw Material

In the present invention, the term "protein raw material" refers to a textured raw material to be introduced into an extruder for producing a textured protein material, and is a raw material containing protein. Specifically, in one aspect, a plant protein material is preferably used.

A "plant protein material" is a protein material derived from a plant, and examples thereof include protein materials derived from oilseeds such as soybean, pea, mung bean, chickpea, rapeseed, cottonseed, peanut, sesame, safflower, sunflower, corn, safflower, and coconut, and protein materials derived from grain seeds such as rice, barley, and wheat. Examples of the protein material include pulverized products of the plants described above, extracted proteins, concentrated proteins, isolated proteins, plant milk such as soymilk, and plant milk powder obtained by powdering plant milk such as soymilk. Examples thereof include rice glutelin, barley prolamin, wheat prolamin, wheat gluten, full-fat soybean powder, defatted soybean powder, concentrated soybean protein, isolated soybean protein, isolated pea protein, and isolated mung bean protein. As the plant protein material, a protein material derived from soybean such as those described in the examples and a protein material derived from oilseed substitutable therewith are particularly preferable, and a protein material derived from beans, among the oilseeds, is more preferable.

Here, using soybean as an example, the following is a typical, non-limiting example of the production of isolated soybean protein. The isolated plant protein can be produced according to the production example described below by using other plant raw materials as well.

### I) Extraction Process

Defatted soybean is used as a soybean raw material, water is added thereto, the mixture is, for example, stirred to obtain a suspension (slurry), and the protein is extracted with water. The water may have a neutral to alkaline pH, and may include a salt such as calcium chloride. The soy pulp is separated by a solid-liquid separation means such as centrifugal separation to obtain a protein extract (so-called soymilk). The product obtained by heat sterilization and spray drying at this stage is a so-called defatted soymilk powder, which can also be used as a powdery plant protein material.

### II) Acid Precipitation Process

Next, an acid such as hydrochloric or citric acid is added to the protein extract to adjust the pH of the extract to a value from 4 to 5, which is the isoelectric point of soybean protein, thereby insolubilizing and acid-precipitating the protein. Next, a supernatant (so-called whey) including carbohydrates and ash that are acid-soluble components is removed by a solid-liquid separation means such as centrifugal separation to collect an "acid-precipitated curd" including acid-insoluble components. The product spray-dried at this stage is a so-called curd powder, which can be used as a powdery plant protein material.

### III) Neutralization Process

Water is then added again to the acid-precipitated curd and, if necessary, the curd is washed with water to obtain a "curd slurry". Then, an alkali such as sodium hydroxide or potassium hydroxide is added to the slurry for neutralization to obtain a "neutralized slurry".

### IV) Sterilization and Powdering Process

Next, the neutralized slurry is sterilized by heating, spray-dried by a spray dryer or the like, and subjected to fluidized bed granulation if necessary to obtain isolated soybean protein.

However, the isolated soybean protein in the present invention is not limited to that produced in the production example described above. As the soybean raw material, various soybean raw materials such as full-fat soybean and partially defatted soybean can be used instead of defatted soybean. Various extraction conditions and devices can be applied to the extraction means as well. As a method for removing the whey from the protein extract, concentration with a membrane such as an ultrafiltration membrane may be performed instead of acid precipitation, and in this case, the neutralization process is not necessarily required. Furthermore, the isolated protein may be produced by applying a method including removing the whey from the soybean material by washing with acidic water or alcohol in advance, and then extracting the protein with neutral or alkaline water. In addition, the protein can be partially hydrolyzed by acting a protease on the solution of the protein in any of the processes described above.

### Soymilk

When plant-based milk, such as soymilk, is used, for example, a typical soymilk or defatted soymilk can be used which is obtained through water extraction from soybeans, such as whole soybeans or defatted soybeans, and removal of soy pulp as insoluble fibers. At that time, to obtain soymilk with a better flavor, an improved production method can be appropriately applied. In addition, the soymilk in a slurry form can also be used in which soy pulp is finely ground rather than being removed from the soymilk.

In one suitable aspect, when a low-fat soy protein raw material with a fat content as low as that of skimmed milk powder is desired to be used, the use of a low-fat or non-fat soymilk is more preferred than the use of defatted soymilk obtained from defatted soybeans in that the flavor can be adjusted to have stronger savoriness with less unpleasant taste. Here, the low-fat or non-fat soymilk is obtained by producing soymilk or the like from whole soybeans and additionally centrifuging the produced soymilk or the like to remove a cream layer rich in a low specific gravity oil. In this case, a lipid content of the low-fat or non-fat soymilk is preferably 10 wt.% or less in dry matter and more preferably 5 wt.% or less in dry matter.

In a more suitable aspect, for the composition of soy proteins, "lipophilic proteins" among soybean proteins are preferably further reduced from the viewpoint of a flavor with less unpleasant taste. For such a soybean protein raw material, a reduced-fat soybean protein material described in JP 2012-16348 A can be used, for example.

Further, the lipid content in the reduced-fat soybean protein material (content of an extract by a chloroform/methanol mixed solvent) may be preferably less than 40 wt.%, more preferably less than 35 wt.%, even more preferably less than 30 wt.%, still more preferably less than 25 wt.%, less than 20 wt.%, less than 15 wt.%, or less than 13 wt.%, with respect to the protein content.

The protein content of the reduced-fat soybean protein material used in the textured protein material may be 40 wt.% or greater, and preferably within a range from 45 to 95 wt.%, based on solid content. As in the case of the soybean emulsion composition, the protein content herein is determined by measuring the nitrogen content by the Kjeldahl method and multiplying the nitrogen content by a nitrogen conversion factor of 5.71. When the soybean protein material is soymilk, typically a lower limit may be 40 wt.% or greater or 45 wt.% or greater, and an upper limit may be 70 wt.% or less or 65 wt.% or less, based on dry matter.

The reduced-fat soybean protein material obtained in this process may be powdered by spray drying or the like. Such a powdered reduced-fat soybean protein material is a favorable plant protein powder having a savory taste and a low grain flavor, and is also suitable for textured protein material applications.

The protein raw material used in the present invention is in a powder/granular form. That is, the protein raw material can be in powder form or granular form. However, in the case of a granular form, the particle size is preferably as small as possible. Preferably, a particle size of 2 mm or less, more preferably 1 mm or less, is appropriate.

The protein content in the solid content of the protein raw material is preferably as high as possible in order to satisfy the protein content of the textured protein material. Specifically, the protein content is preferably 40 wt.% or greater, more preferably 45 wt.% or greater, and may even be 50 wt.% or greater. In addition, the protein content may be 95 wt.% or less, 90 wt.% or less, or 85 wt.% or less.

Note that the protein content of a protein raw material other than soymilk, such as isolated soybean protein or defatted soybean, is a value measured as a percentage relative to a sample and expressed in terms of solid content, and the value is obtained by determining a total nitrogen content in a sample by the Kjeldahl method and multiplying the total nitrogen content by a coefficient of 6.25.

Typically, a mixing ratio of the protein raw material in the solid content of the raw material for producing the textured protein material can be set as appropriate in consideration of the other raw materials according to the desired quality, but is preferably as high as possible in order to satisfy the protein content of the textured protein material. For this purpose, the protein raw material is blended so that the protein content among all raw materials is preferably from 40 to 95 wt.%. Preferably, the protein content may be 45 wt.% or greater, or 50 wt.% or greater. Further, the upper limit may be 93 wt.% or less, and may be 90 wt.% or less.

In the present invention, raw materials such as a dietary fiber, a starch, and an oil and fat can be further used.

### Dietary Fiber

As the dietary fiber, an insoluble dietary fiber or a water-soluble dietary fiber can be used. As the insoluble dietary fiber, for example, wheat bran, soybean pulp, wood pulp, and crystalline cellulose can be used.

The amount of dietary fiber used when the raw material is texturized is preferably from 1 to 10 wt.%, more preferably from 3 to 10 wt.%, and even more preferably from 5 to 10 wt.% in the solid content of the raw materials. Further, the content of dietary fiber in the textured protein material is preferably from 1 to 10 wt.%, more preferably from 3 to 10 wt.%, and even more preferably from 5 to 10 wt.% in the solid content.

### Starch

The starch can be selected from the group consisting of, for example, sweet potato, potato, corn, tapioca, rice, barley, oat, rye, wild oat, buckwheat, maize, wheat, and cassava, unpurified starches thereof, starches derived therefrom, modified starches obtained by subjecting the aforementioned to treatments such as gelatinization, roasting, and hydrolysis, starch derivatives, alkali starches, fractionated starches, physically treated starches, and mixtures thereof.

The amount of starch used for texturizing the raw material is preferably from 1 to 5 wt.%, and more preferably from 2 to 4 wt.%, in the solid content of the raw materials. Further, the content of the starch in the textured protein material is preferably from 1 to 5 wt.%, and more preferably from 2 to 4 wt.%, in the solid content.

### Oil and Fat

Examples of the oil and fat include plant oil and fat such as rapeseed oil, soybean oil, maize oil, sunflower oil, palm oil, palm kernel oil, and coconut oil; animal oil and fat such as beef tallow, lard, and milk fat; fractionated oil of such plant oil and fat or animal oil and fat; hydrogenated oil; transesterified oil; and emulsified oil and fat obtained by emulsification using an emulsifier. Such oil and fat may be used alone or in combination of two or more kinds thereof.

In the present invention, plant oil and fat are preferably used.

The amount of the oil and fat used for texturizing the raw material is preferably from 0.1 to 15 wt.%, more preferably from 3 to 15 wt.%, and even more preferably from 5 to 13 wt.%, in the solid content of the raw materials. Further, the content of the oil and fat in the textured protein material is preferably from 0.1 to 15 wt.%, more preferably from 3 to 15 wt.%, and even more preferably from 5 to 13 wt.%, in the solid content.

### Extruder

The texturization for producing the textured protein material of the present invention is carried out using an extruder. Typically, an extruder includes a mechanism for feeding, kneading, pressurizing (compressing), and heating a raw material fed from a raw material supply port into a barrel by a screw disposed therein, and is mounted with a jacket-type cooling tube at a barrel tip end portion (outlet).

The extruder that can be used is not limited, and a single-screw extruder, a twin-screw extruder, or an extruder having three or more screws can be used. Among them, a twin-screw extruder can be suitably used.

### Operating Conditions of Extruder

The operating conditions under which the raw materials for producing the textured protein material are fed to an extruder and extruded through a die under pressure and heat can be appropriately selected and adjusted based on known conditions. As a non-limiting example, for a heating condition, the temperature of the barrel tip end portion is preferably from 120 to 220°C, and more preferably from 120 to 170°C.

As pressurizing conditions, the die pressure at the barrel tip end is preferably from 0.01 to 50 kg/cm², and more preferably from 0.01 to 20 kg/cm².

### Die

For the textured product extruded through the cooling die installed at the outlet of the extruder, it is important that a length of the longest portion of the hole is at least 10 mm or greater. Preferably, the length should be 20 mm or greater, and more preferably 30 mm or greater. Further, the upper limit is preferably 200 mm or less, more preferably 150 mm or less, and even more preferably 100 mm or less. Examples include from 10 mm to 200 mm, from 10 mm to 150 mm, from 10 mm to 100 mm, from 20 mm to 200 mm, from 20 mm to 150 mm, from 20 mm to 100 mm, from 30 mm to 200 mm, from 30 mm to 150 mm, and from 30 to 100 mm.

Existing plant-based instant food ingredients are used in small granular form due to an uncomfortable mouthfeel thereof, and are far from a satisfactory degree. Accordingly, to solve this problem, desirably a length of the longest portion of the cross section of the cooling die is the length described above.

A shape of the hole in the cooling die may be circular, elliptical, square, rectangular, or the like. The longest portion of the cross section when the shape is circular is the length of the diameter of the circle, the longest portion of the cross section when the shape is elliptical is the length of the major axis of the ellipse, and the longest portion of the cross section when the shape is square or rectangular is the length of the diagonal line of the square or rectangle.

Next, the steps of (B) and (C) will be described.

It is essential that the textured product extruded through the cooling die be cut into an appropriate shape. In order to increase the water absorption rate of the textured product, it is necessary to cut the textured product into a rectangular parallelepiped shape including sides from 5 to 12 mm, a flat shape having a thickness from 0.1 to 5 mm, a length from 1 to 80 mm in an extrusion direction, and a width from 1 to 50 mm, or the like. Here, the "length in an extrusion direction" refers to a length in the direction in which the textured product is extruded, and the "width" refers to a length in a direction perpendicular to the length in the extrusion direction.

The cutting may be performed with a kitchen knife and, in the case of industrial production, for example, a dicer available from Urschel Japan Co., Ltd., or a mini-multislicer available from Asahi Sangyo Co., Ltd. may be used. As long as the product can be cut into a shape described above, any equipment is acceptable.

The thickness is preferably from 0.5 to 5 mm, and more preferably from 1 to 5 mm.

It is essential to freeze the textured product at -5 to -25°C after cutting and then freeze-dry the textured product. When freezing is performed at a temperature lower than -25°C, the freezing rate is increased and ice crystals of water become smaller, resulting in denser fibers. This makes the mouthfeel of the freeze-dried textured product gel-like and different from the mouthfeel of livestock meat. Further, the texture becomes too dense, significantly deteriorating water absorption. Although the method of drying the product includes hot air drying (AD) or microwave drying (MD), both methods shrink the texture, narrowing the voids. Therefore, it is essential to execute freezing at -5 to -25°C followed by freeze-drying.

### Other Texturizing Raw Materials

Various other secondary raw materials can be added as texturizing raw materials of the present invention. For example, fats and oils, alkali metal salts such as common salt, animal proteins such as egg white and casein, carbohydrates such as starch and polysaccharides, dietary fibers, emulsifiers, perfumes, and other known additives may be added as appropriate to the extent that the effects of the present invention are not impaired. However, animal proteins are preferably not included when a plant-based textured protein material is desired.

### Application

The textured protein material of the present invention is characterized by a favorable meat-like fibrous feel and a high water absorption rate. Owing to such characteristics, the textured protein material can be used as an ingredient for instant food having favorable reconstitution in hot water. In addition, the textured protein material can be used as a meat substitute for livestock meat such as beef, pork, or chicken, fish meat, or the like. The textured protein material of the present invention has a favorable meat-like mouthfeel even after reconstitution in hot water.

Further, the textured protein material of the present invention can also be used as a livestock meat-like raw material for sliced meats such as roasted pork.

Further, the textured protein material is preferably seasoned for use as an instant food ingredient. Specifically, in addition to the raw materials of a protein raw material, a starch, a dietary fiber, and preferably an oil and fat, materials such as a reaction flavor, a yeast extract, a spice, a flavor oil, and a savory flavoring agent are preferably added in combination as raw materials for texturization.

### Examples

The present invention will be explained by describing examples below. Note that, in the examples, all parts and percentages are by weight unless otherwise specified.

### Examples 1 to 4, Comparative Examples 1 and 2

According to the raw material compositions and operating conditions listed in Table 1, raw materials were introduced into a twin-screw extruder, kneaded, and heated under pressure, and the kneaded product was extruded through a cooling die at a barrel tip end to obtain a textured product. The water content of the obtained textured product was the same numerical value as that of the added water percentage. The obtained textured product was cut into a cube having a length of 10 mm using a multislicer available from Asahi Sangyo Co., Ltd., frozen at -18°C, and then freeze-dried to obtain a textured protein material. Note that the twin-screw extruder (available from Kowa Kogyo Inc.) was used under the following conditions.
· Cooling die: opening 10 mm × 40 mm × 90 cm length (shape of hole of cooling die: 10 mm × 40 mm rectangle, length of longest portion of hole: 41.2 mm length of diagonal of rectangle)
· Die pressure at barrel tip end: controlled in a range from 0.01 to 1 MPa
· Barrel temperature: inlet side: 80°C, central portion: from 90 to 110°C, outlet side: from 120 to 150°C.

**Table 1**

| | Comparative Example 1 | Example 1 | Example 2 | Example 3 | Example 4 | Comparative Example 2 |
|---|---|---|---|---|---|---|
| Isolated soybean protein (protein content: 90% in terms of solid content) (parts) | 85 | 85 | 85 | 85 | 85 | 85 |
| Soybean dietary fiber (parts) | 10 | 10 | 10 | 10 | 10 | 10 |
| Corn starch (parts) | 4 | 4 | 4 | 4 | 4 | 4 |
| Salt (parts) | 1 | 1 | 1 | 1 | 1 | 1 |
| Processed powder amount (kg/h) | 3.2 | 3.5 | 4.3 | 4.3 | 4.3 | 4.3 |
| Added water amount (kg/h) | 14.4 | 13.6 | 10 | 8.6 | 7 | 6 |
| Added water percentage (%) | 82 | 80 | 70 | 67 | 62 | 58 |
| Mouthfeel evaluation | × | Δ | ○ | ⊚ | ○ | × |

| | | | | | | |
|---|---|---|---|---|---|---|
| Dietary fiber: Soybean dietary fiber available from Fuji Oil Co., Ltd. | | | | | | |

The mouthfeel of each textured protein material was evaluated five minutes after pouring 400 ml of 95°C hot water into a vertical 500 ml tall beaker containing 10 grains of the material. Seven skilled panelists tasted the samples and evaluated the mouthfeel of each textured protein material. The mouthfeel was evaluated based on the evaluation criteria described below, and determined by joint consultation among panelists. The results are listed in Table 1. Evaluations of △, ○, and ⊚ indicate acceptable results.

### Evaluation Criteria

### •: Mouthfeel evaluation

⊚: Very strong meat-like elastic sensation
○: Strong meat-like elastic sensation
△: Meat-like elastic sensation
×: No meat-like elastic sensation

In Comparative Example 1, the mouthfeel was crumbly and far from meat-like. In Comparative Example 2, although it provided a very strong elastic sensation, the looseness was poor and a gel feel remained in the mouth for a long time. The elastic sensation was judged to be strong but not meat-like. On the other hand, the textured protein materials of Examples 1 to 4 provided meat-like elastic sensation and were favorable.

In the mouthfeel evaluations listed in Table 1, reconstitution in hot water was carried out for five minutes. However, for actual instant foods, water must be absorbed quickly and hard portions that have not absorbed water must not remain. Therefore, the same method as in the evaluation of Example 1 was used to measure the mouthfeel and the amount of water absorption after two minutes in Examples 1 to 4, which were in the acceptable range in the mouthfeel evaluation. The amount of water absorption was measured and calculated in terms of how many times its own weight of hot water was absorbed after two minutes.

As for the evaluation of reconstitutability of the textured protein material in water, seven panelists skilled in sensory evaluation of the textured protein material tasted and evaluated materials. The reconstitutability in water was evaluated based on the evaluation criteria described below, and was determined by joint consultation among panelists. The results are listed in Table 2. "○" indicates acceptable.

### Evaluation Criteria

### •: Sensory evaluation related to restorability evaluation

O: Reconstituted in water without any problem. No hard portions.
×: Hard portions remain; not completely reconstituted in water.

**Table 2**

| | Example 1 | Example 2 | Example 3 | Example 4 |
|---|---|---|---|---|
| Restorability evaluation | ○ | ○ | ○ | ○ |
| Water absorption (times) | 3.2 | 2.9 | 2.3 | 2.2 |

In Examples 1 to 4, no hard portions were perceived, and restorability in hot water was unproblematic.

### Examples 5 to 8, Comparative Example 3

The ingredients of instant noodles include thinly sliced ingredients such as roasted pork. In the present invention, the shapes of thinly sliced meat were also studied. According to the raw materials and operating conditions of Example 3 in Table 1, a kneaded product of the raw materials was extruded through the cooling die at the barrel tip end to obtain a textured product. The water content of the obtained textured product was the same numerical value as that of the added water percentage. The textured product was cut into flat shapes having thicknesses of 1, 2, 3, 5, and 10 mm, a length in the extrusion direction of 40 mm, and a width of 40 mm, using a meat slicer. The cut products were then frozen at -18°C and freeze-dried to obtain textured protein materials.

The materials were evaluated for restorability, measured for amount of water absorption, and evaluated for mouthfeel in the same manner as in Example 1. The results are listed in Table 3.

**Table 3**

| | Example 5 | Example 6 | Example 7 | Example 8 | Comparative Example 3 |
|---|---|---|---|---|---|
| Thickness (mm) | 1 | 2 | 3 | 5 | 10 |
| Restorability evaluation | ○ | ○ | ○ | ○ | × |
| Water absorption (times) | 2.6 | 2.3 | 2.7 | 3.4 | 3.8 |
| Mouthfeel evaluation | ○ | ○ | ⊚ | ⊚ | × |

As a result of the evaluation of reconstitutability in hot water, the restorability was favorable up to a depth of 5 mm, but poor at a depth of 10 mm. Further, the mouthfeel evaluation of each example was favorable. Accordingly, the thickness of the textured protein material is desirably 5 mm or less. The textured protein material having a thickness of 10 mm was not completely restored through to the interior and had hard portions. As a result, meat-like elasticity was not perceived and the mouthfeel was evaluated as ×.

Next, a textured protein material was produced using reduced-fat soymilk powder as a reduced-fat soybean protein material.

### Production Example 1: Preparation of Reduced-Fat Soymilk Powder

Low-fat soymilk produced by Fuji Oil Co., Ltd. was dried in a spray dryer and powdered to obtain a reduced-fat soymilk powder.

### Examples 9 and 10

Textured products were obtained by using the reduced-fat soymilk powder obtained in Production Example 1 (protein content based on dry matter: 45%, lipid content based on protein content: 11.5%) and, in accordance with the compositions and conditions listed in Table 5, texturizing the materials with the cooling die, the die pressure at the barrel tip end, and the barrel temperature set in the same manner as in Example 1. The water content of the obtained textured product was the same numerical value as that of the added water percentage. Further, defatted soybean powder having substantially the same protein content was processed in the same manner to obtain a textured product. The water content of the obtained textured product was the same numerical value as that of the added water percentage. The textured products were each cut into a flat shape having a thickness of 2 mm, a length in the extrusion direction of 40 mm, and a width of 40 mm, using a meat slicer. The cut products were then frozen at -18°C and freeze-dried to obtain textured protein materials. The materials were evaluated for restorability, measured for amount of water absorption, and evaluated for mouthfeel in the same manner as in Example 1. The results are listed in Table 4.

**Table 4**

| | Example 9 | Example 10 |
|---|---|---|
| Defatted soybean powder (protein content: 52% in terms of solid content) (parts) | 100 | - |
| Reduced-fat soymilk powder (protein content: 45% in terms of solid content) (Production Example 1) (parts) | - | 100 |
| Processed powder amount (kg/h) | 4.3 | 4.3 |
| Added water amount (kg/h) | 8.6 | 8.7 |
| Added water percentage (%) | 67 | 67 |
| Restorability evaluation | ○ | ○ |
| Water absorption (times) | 2.3 | 2.7 |
| Mouthfeel evaluation | ○ | Δ |

The textured protein material produced using the reduced-fat soymilk powder of Production Example 1 had a meat-like mouthfeel and was favorable. Reduced-fat soymilk powder could also be used in this application.

The reduced-fat soymilk powder is a favorable plant protein powder having little grain flavor and is also suitable for textured protein material applications, making it possible to prepare an ingredient having little grain odor even in instant food ingredient applications.

Further, the textured protein material produced using the defatted soybean powder of Example 9 also had a meat-like mouthfeel and was favorable.

### Verification of Freezing Method - Examples 11 and 12, Comparative Example 4

The freezing method was also verified.

Production was carried out under the conditions of Example 3 to obtain a textured product. The water content of the obtained textured product was the same numerical value as that of the added water percentage. The obtained textured product was cut into cubes having a length of 10 mm using a multislicer available from Asahi Sangyo Co., Ltd., frozen at -18°C, -22°C, and -40°C, and then freeze-dried to obtain textured protein materials. The textured protein materials were evaluated for restorability, measured for amount of water absorption, and evaluated for mouthfeel in the same manner as in Example 1. The results are listed in Table 5.

**Table 5**

| | Example 11 | Example 12 | Comparative Example 4 |
|---|---|---|---|
| Cooling temperature (°C) | -18 | -22 | -40 |
| Restorability evaluation | ○ | ○ | × |
| Water absorption (times) | 2.3 | 2.1 | 1.6 |
| Mouthfeel evaluation | ○ | ○ | × |

In Comparative Example 4 in which the cooling temperature was -40°C, reconstitution in water was not complete, hard portions not reconstituted in hot water were present in some places, and restorability was poor. On the other hand, in Examples 11 and 12 in which cooling was performed at -18°C and -22°C, reconstitution in hot water was unproblematic, and the restorability was favorable. This is because, when the textured protein material is frozen, finer ice crystals of water and a denser fiber texture are achieved at -40°C. On the other hand, with cooling at -18°C and -22°C, the ice crystals are large and gaps form between the fibers. The difference in the water absorption rate conceivably occurs because the size of the voids after water removal by freeze-drying is larger at the cooling temperature of -18°C.

### Evaluation of Seasoned Textured Protein Material - Examples 13 to 15

Next, textured protein materials that were seasoned using an oil and fat and seasonings were evaluated. In accordance with the compositions and conditions in Table 6, materials were texturized with the cooling die, the die pressure at the barrel tip end, and the barrel temperature set in the same manner as in Example 1 to obtain textured products. The water content of the obtained textured product was the same numerical value as that of the added water percentage. The obtained textured products were each cut into a rectangular parallelepiped shape including sides of 10 mm, and freeze-dried to obtain a textured protein material. The textured protein materials were evaluated in the same manner as in Example 1, and the results are listed in Table 7.

**Table 6**

| | Example 3 | Example 13 | Example 14 | Example 15 |
|---|---|---|---|---|
| Isolated soybean protein (protein content: 90% in terms of solid content) | 85 | 78.7 | 74.6 | 74.2 |
| Dietary fiber (parts) | 10 | 9.3 | 8.8 | 8.7 |
| Starch (parts) | 4 | 3.7 | 3.5 | 3.5 |
| Salt (parts) | 1 | 0.9 | 0.9 | 0.9 |
| Palm oil (parts) | - | 7.4 | 12.3 | 7 |
| Yeast extract (parts) | - | - | - | 5.2 |
| Beef flavor (parts) | - | - | - | 0.5 |
| Processed powder amount (kg/h) | 4.3 | 4.3 | 4.3 | 4.3 |
| Added water amount (kg/h) | 8.9 | 8.5 | 7.8 | 8.5 |
| Added water percentage (%) | 67 | 66 | 64 | 66 |
| Added palm oil (%) | 0 | 2.5 | 4.4 | 2.3 |

| | | | | |
|---|---|---|---|---|
| Yeast extract: yeast extract available from Fuji Foods Corporation Beef flavor: beef flavor available from T. Hasegawa Co., Ltd. | | | | |

**Table 7**

| | Example 3 | Example 13 | Example 14 | Example 15 |
|---|---|---|---|---|
| Isolated soybean protein (protein content: 90% in terms of solid content) | 85 | 78.7 | 74.6 | 74.2 |
| Dietary fiber (parts) | 10 | 9.3 | 8.8 | 8.7 |
| Starch (parts) | 4 | 3.7 | 3.5 | 3.5 |
| Salt (parts) | 1 | 0.9 | 0.9 | 0.9 |
| Palm oil (parts) | - | 7.4 | 12.3 | 7 |
| Yeast extract (parts) | - | - | - | 5.2 |
| Beef flavor (parts) | - | - | - | 0.5 |
| Restorability evaluation | ○ | ○ | ○ | ○ |
| Water absorption (times) | 2.3 | 2.5 | 1.9 | 2.1 |
| Mouthfeel evaluation | ⊚ | ○ | ⊚ | ⊚ |

In all cases, restorability was unproblematic. In Examples 13 to 15, the mouthfeel evaluation was favorable, and the melt-in-mouth feel was further improved as compared with Example 3. This is considered to be an effect obtained by the blending of the oil. Further, in Example 15 in which seasonings were used, a livestock-meaty flavor and savoriness were also perceived in terms of taste.

Among commercially available dried meat-like ingredients, assembled dried ingredient food products can include the largest amount of plant protein. Assembled dried ingredient food products are produced by mixing raw materials such as meat, commercially available soybean protein, water, and seasonings.

The mouthfeel of such assembled dried ingredient food products was compared with that of the textured protein material of Example 3.

### Comparative Example 5: Production of Assembled Dried Ingredient Food Product

In accordance with the composition in Table 8, raw materials were stirred, formed to a thickness of 10 mm, steamed and heated at 210°C for five minutes, and frozen at -18°C. After freezing, the product was cut into cubes of 10 mm, freeze-dried, adjusted to a water content of about 3% to produce an assembled dried ingredient food product. For the mouthfeel, a fiber mouthfeel evaluation was conducted in the same manner as the evaluation in Example 1. The results are listed in Table 9.

Note that, as the granular soybean protein, "New Fujinic 50" available from Fuji Oil Co., Ltd. was used.

**Table 8**

| | Composition ratio (%) |
|---|---|
| Minced chicken | 20 |
| Granular soybean protein | 29 |
| Reconstitution water | 45 |
| Seasoning, etc. | 6 |
| Total | 100 |

**Table 9**

| | Example 3 | Comparative Example 5 |
|---|---|---|
| Mouthfeel evaluation | ⊚ | × |

Comparative Example 5 had a crumbly mouthfeel and imparted a sponge-like foam structure sensation, not a meat-like mouthfeel. Accordingly, the textured protein material produced by the production method according to the present invention has a more favorable meat-like mouthfeel than that produced by a typical method for producing a dried meat substitute ingredient by assembly.

In Example 3, the product had a dense, meat-like mouthfeel despite the limited use of plant-based ingredients, and therefore the structure was observed under a microscope.

Slices were prepared by the method described below and observed under a microscope.

### Slice Preparation Method

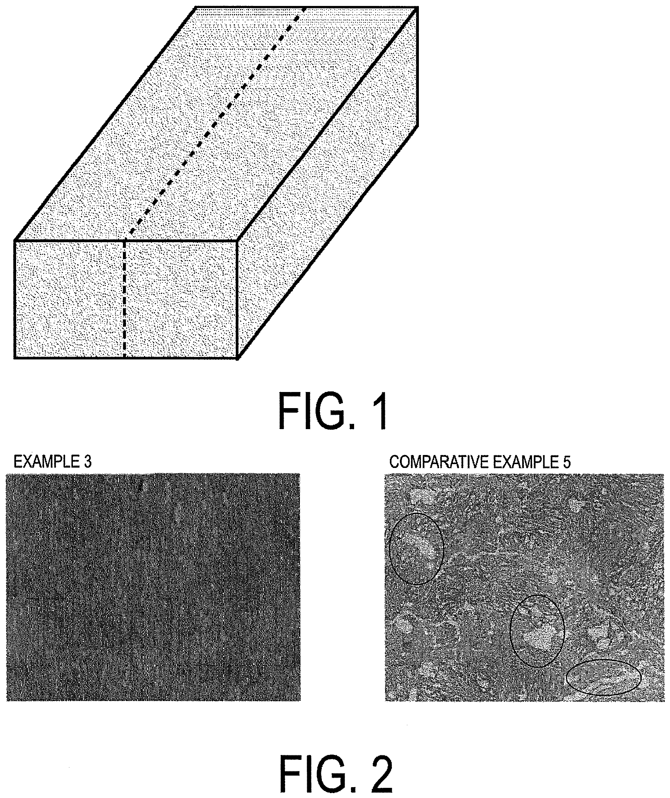

1. For Example 3, as illustrated in FIG. 1, a cut surface indicated by the dashed line was used as an observation plane. For Comparative Example 5, the cube was equally divided, and a cross section was used as an observation plane.
2. The samples were each embedded in 3% carboxymethylcellulose (CMC) and frozen, and then slices of 10 µm were prepared using a freezing microtome.
3. The slices were each stained by a method described in JP 4780099 B and observed under an optical microscope.

The results are shown in FIG. 2 below.

In FIG. 2, there were clearly larger voids and cracks in the structure of Comparative Example 5 than in Example 3 (portions in black circles in the micrograph of Comparative Example 5 in FIG. 2). In the mouthfeel evaluation listed in Table 9, the crumbliness and the sponge-like foam structure were perceived due to this structure. On the other hand, in Example 3, the texture was dense with fine bubbles. The fibers were also observed as being oriented in the longitudinal direction of FIG. 2. This was regarded as the reason for the meat-like mouthfeel in the mouthfeel evaluation listed in Table 9.

According to the results described above, it was discovered that it is possible to produce a textured plant protein material having chewiness due to a dense texture with small voids, and favorable restorability when reconstituted in hot water.

## Claims

1. A method for producing a textured protein material that is freeze-dried, the method comprising:
(A) introducing a raw material including a protein raw material into an extruder, adding water to attain a water content of from 60 to 80 wt.% with respect to a total amount of the water and the raw material including the protein raw material, kneading and heating under pressure the resulting mixture, cooling the kneaded mixture in a cooling die installed at an outlet of the extruder and including a hole having a length of a longest portion of 10 mm or greater, and extruding the mixture through the cooling die to obtain an unpuffed textured product;
(B) cutting the unpuffed textured product obtained in (A) into a rectangular parallelepiped shape including sides from 5 to 12 mm, or cutting the unpuffed textured product obtained in (A) into a flat shape having a thickness from 0.1 to 5 mm, a length from 1 to 80 mm in an extrusion direction, and a width from 1 to 50 mm; and
(C) freezing the unpuffed textured product obtained in (B) at -5 to -25°C and freeze-drying the unpuffed textured product.

2. The method for producing a textured protein material according to claim 1, wherein, in step (A), a content of the protein raw material in the raw material is from 40 to 95 wt.% in terms of solid content.

3. The method for producing a textured protein material according to claim 1, wherein the protein raw material is a plant protein material.

4. The method for producing a textured protein material according to claim 2, wherein the protein raw material is a plant protein material.

5. The method for producing a textured protein material according to claim 4, wherein the plant protein material is a reduced-fat soybean protein material satisfying the following requirements (a) and (b):
(a) a protein content based on solid content is 40 wt.% or greater, and
(b) a lipid content of the soybean protein material, which is a content of an extract by a chloroform/methanol mixed solvent, is less than 40 wt.% with respect to the protein content.

6. The method for producing a textured protein material according to claim 1, wherein, in step (A), the raw material further includes a dietary fiber in an amount from 1 to 10 wt.% in terms of solid content.

7. The method for producing a textured protein material according to claim 1, wherein, in step (A), the raw material further includes a starch in an amount from 1 to 5 wt.% in terms of solid content.

8. The method for producing a textured protein material according to claim 1, wherein, in step (A), the raw material further includes a dietary fiber in an amount from 1 to 10 wt.% and a starch in an amount from 1 to 5 wt.% in terms of solid content.

9. The method for producing a textured protein material according to claim 5, wherein, in step (A), the raw material further includes a dietary fiber in an amount from 1 to 10 wt.% in terms of solid content.

10. The method for producing a textured protein material according to claim 5, wherein, in step (A), the raw material further includes a starch in an amount from 1 to 5 wt.% in terms of solid content.

11. The method for producing a textured protein material according to claim 5, wherein, in step (A), the raw material further includes a dietary fiber in an amount from 1 to 10 wt.% and a starch in an amount from 1 to 5 wt.% in terms of solid content.

12. The method for producing a textured protein material according to claim 6, wherein, in step (A), the raw material further includes an oil and fat in an amount from 0.1 to 15 wt.% in terms of solid content.

13. The method for producing a textured protein material according to claim 7, wherein, in step (A), the raw material further includes an oil and fat in an amount from 0.1 to 15 wt.% in terms of solid content.

14. The method for producing a textured protein material according to claim 8, wherein, in step (A), the raw material further includes an oil and fat in an amount from 0.1 to 15 wt.% in terms of solid content.

15. The method for producing a textured protein material according to claim 9, wherein, in step (A), the raw material further includes an oil and fat in an amount from 0.1 to 15 wt.% in terms of solid content.

16. The method for producing a textured protein material according to claim 10, wherein, in step (A), the raw material further includes an oil and fat in an amount from 0.1 to 15 wt.% in terms of solid content.

17. The method for producing a textured protein material according to claim 11, wherein, in step (A), the raw material further includes an oil and fat in an amount from 0.1 to 15 wt.% in terms of solid content.

18. The method for producing a textured protein material according to claim 1, wherein the textured protein material is used for instant food.

19. The method for producing a textured protein material according to claim 5, wherein the textured protein material is used for instant food.

20. The method for producing a textured protein material according to claim 6, wherein the textured protein material is used for instant food.

21. The method for producing a textured protein material according to claim 7, wherein the textured protein material is used for instant food.

22. The method for producing a textured protein material according to claim 8, wherein the textured protein material is used for instant food.

23. The method for producing a textured protein material according to claim 9, wherein the textured protein material is used for instant food.

24. The method for producing a textured protein material according to claim 10, wherein the textured protein material is used for instant food.

25. The method for producing a textured protein material according to claim 11, wherein the textured protein material is used for instant food.

26. The method for producing a textured protein material according to claim 12, wherein the textured protein material is used for instant food.

27. The method for producing a textured protein material according to claim 13, wherein the textured protein material is used for instant food.

28. The method for producing a textured protein material according to claim 14, wherein the textured protein material is used for instant food.

29. The method for producing a textured protein material according to claim 15, wherein the textured protein material is used for instant food.

30. The method for producing a textured protein material according to claim 16, wherein the textured protein material is used for instant food.

31. The method for producing a textured protein material according to claim 17, wherein the textured protein material is used for instant food.

32. A textured protein material that is freeze-dried, the textured protein material comprising a protein raw material in an amount from 40 to 95 wt.% in terms of solid content and having a shape satisfying the following (1) or (2):
(1) a rectangular parallelepiped shape including sides from 5 to 12 mm, or
(2) a flat shape having a thickness from 0.1 to 5 mm, a length from 1 to 80 mm in an extrusion direction, and a width from 1 to 50 mm.

33. The textured protein material according to claim 32, wherein the protein raw material is a plant protein material.

34. The textured protein material according to claim 33, wherein the plant protein material is a reduced-fat soybean protein material satisfying the following requirements (a) and (b):
(a) a protein content based on dry matter is 40 wt.% or greater, and
(b) a lipid content of the soybean protein material, which is a content of an extract by a chloroform/methanol mixed solvent, is less than 40 wt.% with respect to the protein content.

35. The textured protein material according to claim 34, further comprising a dietary fiber in an amount from 1 to 10 wt.% in terms of solid content.

36. The textured protein material according to claim 34, further comprising a starch in an amount from 1 to 5 wt.% in terms of solid content.

37. The textured protein material according to claim 34, further comprising a dietary fiber in an amount from 1 to 10 wt.% and a starch in an amount from 1 to 5 wt.% in terms of solid content.

38. The textured protein material according to claim 35, further comprising an oil and fat in an amount from 0.1 to 15 wt.% in terms of solid content.

39. The textured protein material according to claim 36, further comprising an oil and fat in an amount from 0.1 to 15 wt.% in terms of solid content.

40. The textured protein material according to claim 37, further comprising an oil and fat in an amount from 0.1 to 15 wt.% in terms of solid content.

41. The textured protein material according to claim 32, wherein the textured protein material is used for instant food.

42. The textured protein material according to claim 34, wherein the textured protein material is used for instant food.

43. A meat substitute comprising:
the textured protein material described in claim 32.

44. A meat substitute comprising:
the textured protein material described in claim 34.

45. An instant food ingredient comprising:
the textured protein material described in claim 32.

46. An instant food ingredient comprising:
the textured protein material described in claim 34.
